# EUROPEAN PATENT APPLICATION

(11) **EP 3 061 719 A1**
(43) Date of publication of application: **31.08.2016**
(21) Application number: 14855444.7
(22) Date of filing: 24.10.2014
(51) Int. Cl.: B66F 9/075, B66C 13/18, B66C 13/46

(54) **FORKLIFT MANAGING DEVICE**

(30) Priority: 24.10.2013 KR 20130127252
(71) Applicant: Hyundai Heavy Industries Co., Ltd., Ulsan 682-792 (KR)
(72) Inventor: YOON, Jae Hak, Seoul 137-765 (KR); JUNG, Myung Kil, Seongnam-si Gyeonggi-do 463-737 (KR); KANG, Ho Heung, Gyeongsangnam-do 642-942 (KR); PARK, Gi Hyoung, Anyang-si Gyeonggi-do 430-710 (KR)
(74) Representative: Betten & Resch
(86) International application number: PCT/KR2014/010042
(87) International publication number: WO 2015/060674

(57) **Abstract**

The present invention relates to a forklift managing device using near field communication. The forklift managing device includes: a first communication unit connected to a parent device for managing a forklift through a wireless network; a radio frequency identification (RFID) reader unit for activating an RFID tag or an RFID card within a certain distance and receiving information within the RFID tag or the RFID card; a controller connected to the first communication unit and the RFID reader unit, the controller controlling the first communication unit and the RFID reader unit, the controller controlling functions of the forklift with a pedestrian recognition mode among multiple modes including the pedestrian recognition mode, an operator authentication mode, a vehicle management mode, a task management mode, a logistics management mode, and an operation management mode as the primary mode; a storage unit connected to the controller, the storage unit storing forklift management information; and a second communication unit connected to the controller and at least one forklift controller, the second communication unit being connected to at least one forklift controller for performing hydraulic pressure control, operation control, or hydraulic pressure and operation control.

## Description

### TECHNICAL FIELD

The present invention relates to a forklift managing device, and more particularly, to a forklift managing device using near field communication.

### BACKGROUND ART

Studies on the development of low-carbon and high-efficiency cargo handling equipments and intelligent logistics centers have been actively conducted under the development paradigm of low carbon green growth. After the United Nations Framework Convention on Climate Change (Rio de Janeiro, Brazil in June, 1992) came into effect, research and development have been actively conducted in high-tech logistics technical fields such as automation of logistics facilities and intelligence of logistics information technology.

Logistics equipments include a forklift, a drum lift, a hand pallet, a tractor, a bogie, a lift, an intainer, a container, a VNA truck, a stacker, a Santo car, a lappet truck, a turret truck, a cart, a rolltainer, a ramp, an order picker, and the like. Among the logistics equipments, the forklift is one of representative logistics equipments.

The forklift is called as a forklift truck, and generally includes a truck body and a task device so as to transfer various types of materials. The truck body is divided into a vehicle device and a counterweight for preventing the center of gravity of the truck body from being excessively inclined by the weight of goods. The task device is divided into forks and a mast. The mast is provided in a structure of a plurality of vertical frames, and is tilted in a freight transport task. The forks are configured with L-shaped special iron bars lifting up and down along the vertical frames. If the forklift is used, productivity in logistics tasks for loading, unloading or transporting freight can be improved, and convenient tasks are possible. The forklift is used to transport objects and materials in not only logistics industries but also most of industries, and have very great influence on overall industries.

An example of logistics management using a forklift has been disclosed in Korean Patent Laid-open Publication No. 10-2013-0065863. A material management method disclosed in the publication is configured to use fixed RFID tags installed on an outdoor bottom surface at a predetermined distance and a material RFID tag attached to materials to be released, so that location information of materials released from the indoor to the outdoor is rapidly and accurately inquired without being affected by a surrounding environment and space, and information on released materials is systematically identified, thereby performing efficient material management.

The above-described conventional art is only an example of a high-efficiency cargo handling task and intelligent logistics management using a forklift, and requires various functions for efficient management of the forklift, logistics management using the forklift, prevention of misuse/abuse of the forklift, prevention of safety accidents of the forklift, and the like. However, any forklift capable of satisfying the functions has not yet been provided.

### DISCLOSURE

### TECHNICAL PROBLEM

An embodiment of the present invention is directed to a forklift managing device which can control various functions of a fork lift more suitable for low-carbon and high-efficiency cargo handling tasks and intelligent logistics management with a pedestrian recognition mode among various control modes as the primary mode.

Another embodiment of the present invention is directed to a forklift managing device which can control functions of a forklift to operate while dynamically switching multiple modes including operator authentication, vehicle management, task management, logistics management, and operation management with a pedestrian recognition mode as the primary mode.

### TECHNICAL SOLUTION

According to an aspect of the present invention, there is provided a forklift managing device including: a first communication unit connected to a parent device for managing a forklift through a wireless network; a radio frequency identification (RFID) reader unit for activating an RFID tag or an RFID card within a certain distance and receiving information within the RFID tag or the RFID card; a controller connected to the first communication unit and the RFID reader unit, the controller controlling the first communication unit and the RFID reader unit, the controller controlling functions of the forklift with a pedestrian recognition mode among multiple modes including the pedestrian recognition mode, an operator authentication mode, a vehicle management mode, a task management mode, a logistics management mode, and an operation management mode as the primary mode; a storage unit connected to the controller, the storage unit storing forklift management information; and a second communication unit connected to the controller, the second communication unit being connected to at least one forklift controller for performing hydraulic pressure control, operation control, or hydraulic pressure and operation control. The controller controls the pedestrian recognition mode as a standby mode to be shifted to any one mode among multiple modes including the operator authentication mode, the vehicle management mode, the task management mode, the logistics management mode, and the operation management mode or to be returned from the shifted mode to the pedestrian recognition mode, and outputs an alarm signal through an alarm output unit connected to the controller or transmits an operation stop control signal to the forklift controller through the second communication unit when a pedestrian approaching the forklift is recognized through a signal from the RFID reader unit.

The RFID reader may include: a first terminal connected to a first antenna provided at an upper portion of a mast at the front of the forklift or at a front end portion of an overhead guard; and a second terminal connected to a second antenna provided at a counterweight at the rear of the forklift or a rear end portion of the overhead guard.

The RFID reader may further include an RFID recognition terminal for recognizing an RFID card of a user or operator.

The RFID reader may include: a first reader module connected to the first terminal; a second reader module connected to the second terminal; and a third reader module connected to an RFID recognition terminal. The recognition distance of the third reader module may be shorter than that of the first reader module or the second reader module.

The forklift managing device may further include a power supply blocking unit connected to the controller, the power supply blocking unit blocking a power supply of the forklift. The controller may allow an operation of the forklift when operator information is normally recognized through a signal from the RFID recognition terminal, and block the operation of the forklift when the operator information is abnormally recognized.

The storage unit may store operator identification information to be compared with the operator information.

The controller may receive the operator identification information through the first communication unit from the parent device.

In a case where a variation per unit time of a signal input to the RFID reader unit is greater than a reference value, the controller may determine the case as a preset first situation on an approach of a pedestrian, and transmit the operation stop control signal to the forklift controller through the second communication unit.

The controller may transmit the operation stop control signal in a state in which an auxiliary power supply blocking circuit for seat belt wearing detection of the forklift is activated.

The controller may output a control signal for controlling at least one of a steering angle or a velocity so as to prevent an overturn of the forklift according to signals of a vehicle velocity sensor and a steering sensor, which are installed in the forklift, under the pedestrian recognition mode.

The controller may detect that an operator has left an operator's seat of the forklift and output a control signal for automatically parking the forklift according to signals of a seating detection sensor and a parking switch, which are installed in the forklift, under the pedestrian recognition mode.

The forklift managing device may further include a nut loosening monitoring switch for detecting a loosened lift chain fixing nut installed in the forklift and blocking power applied to the controller or the forklift controller of the forklift, under the pedestrian recognition mode.

The controller, under the pedestrian recognition mode, may detect an on or off state of an ignition switch, detect the on state of the seating detection sensor or a seat switch, and release an alarm buzzer, set an driving function to a feasible state, or set a task device function to a feasible state when both the ignition switch and the seat switch are in the on state. The controller may detect whether an operation switch of a parking brake is in the on state when both the ignition switch and the seat switch are in the off state, and output an alarm signal when the operation switch of the parking brake is in the off state. The controller may detect whether a gear neutral signal is in the one state and the operation switch of the parking brake is in the on state when the ignition switch is in the on state and the seat switch is in the off state, and output the alarm signal, blocks the driving function, and blocking the task device function when the neutral signal is in the off state and the operation switch of the parking brake is in the off state.

The controller may update previously stored firmware of the controller or the forklift controller, using firmware received through the first communication unit, during an operation of the forklift.

The forklift managing device may further include a user interface unit connected to the controller, the user interface unit outputting information from the controller and receiving a user input, the user interface unit displaying or outputting an event that occurs in at least one mode among the operator authentication mode, the vehicle management mode, the task management mode, the logistics management mode, and the operation management mode with the pedestrian recognition mode as the primary mode.

The controller may transmit information of the RFID tag, acquired through the RFID reader unit, and forklift related information received from the forklift controller to the parent device through the first communication unit, and control information from the parent device to be displayed on a screen of the user interface unit.

### ADVANTAGEOUS EFFECTS

According to the present invention, it is possible to provide a forklift managing device which can control various functions of a forklift more suitable for low-carbon and high-efficiency cargo handling tasks and intelligent logistics management with a pedestrian recognition mode among various control modes as the primary mode.

According to the present invention, it is possible to provide a forklift managing device which can control functions of a forklift to operate while dynamically switching multiple modes including operator authentication, vehicle management, task management, logistics management, and operation management with a pedestrian recognition mode as the primary mode, so that the forklift can be usefully used in protection of an operator and workers, efficient management of the forklift, low-carbon and high-efficiency cargo handling tasks, intelligent logistics management, and the like.

### BRIEF DESCRIPTION OF THE DRAWINGS

FIG. 1 is a schematic configuration view of a logistics management system employing a forklift managing device according to an embodiment of the present invention.
FIG. 2 is a perspective view of an embodiment of a forklift equipped with the forklift managing device of FIG. 1.
FIG. 3 is a right side view of the forklift of FIG. 2.
FIG. 4 is a plan view of the forklift of FIG. 3.
FIG. 5 is a right side view of a modification of the forklift equipped with the forklift managing device in FIG. 2.
FIG. 6 is a block diagram of an embodiment of the forklift managing device of FIG. 1.
FIG. 7 is a block diagram of an embodiment of a radio frequency identification reader unit of FIG. 6.
FIG. 8 is a block diagram of another embodiment of the forklift managing device of FIG. 1.
FIG. 9 is a graph illustrating a dynamic model applied to forklift overturn prevention control provided in the forklift managing device of FIG. 8.
FIG. 10 is a view illustrating a relation function between steering angle and vehicle velocity in the forklift managing device of FIG. 8.
FIG. 11 is a flowchart illustrating a forklift overturn prevention control process of the forklift managing device of FIG. 8.
FIG. 12 is a circuit diagram illustrating a function of proximity alarm prior to ignition in the forklift equipped with the forklift managing device of FIG. 8.
FIG. 13 is a timing diagram illustrating an ignition sequence of a circuit of FIG. 12.
FIG. 14 is a partial enlarged perspective view of a lift of the forklift, illustrating a function of detecting a loosened lift chain fixing nut in the forklift equipped with the forklift managing device of FIG. 8.
FIG. 15 is an electrical connection view illustrating the function of FIG. 14.
FIG. 16 is a state transition view illustrating an operation principle of the forklift managing device of FIG. 8.

### MODE FOR THE INVENTION

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

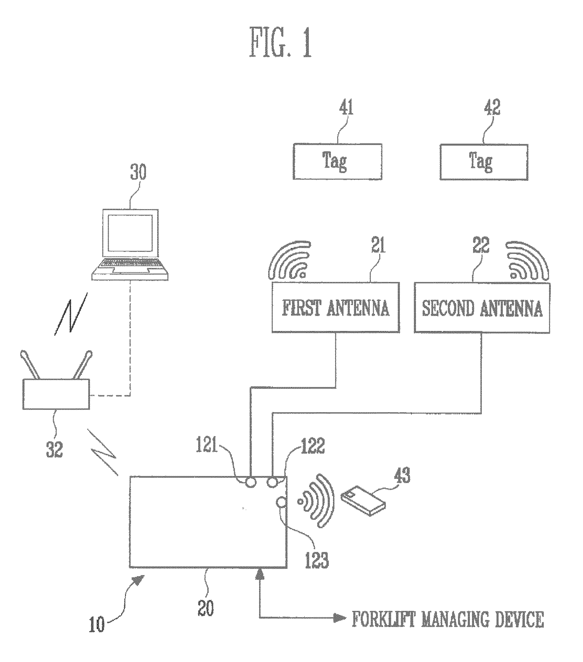

FIG. 1 is a schematic configuration view of a logistics management system employing a forklift managing device according to an embodiment of the present invention.

Referring to FIG. 1, the logistics management system employing according to this embodiment includes a forklift managing device 10, a parent device 30, radio frequency identification (RFID) tags 41 and 42, and an RFID card 43.

In the logistics management system of this embodiment, the parent device 30 installed in a logistics warehouse, a cargo handling workplace, or the like confirms a stock state, a transport state, a release state, etc. of goods or materials. Also, the parent device 30 may authenticate an operator, maintain/manage a forklift, manage tasks of the forklift, or perform logistics management through the forklift managing device 10.

The parent device 30 is connected to the forklift managing device 10 through a wireless network. The parent device 30 may transmit/receive data to/from the forklift managing device 10 by being connected to the forklift managing device 10 through a near field access device such as access point 32, which is installed in a workplace, etc.

The parent device 30 may include a storage device that stores a program for operator authentication, forklift management, forklift task management, and forklift logistics management and a processor that performs the program stored in the storage device. The program may include an operator identification program, a forklift management program, a vehicle group management program, a logistics management program, and the like. The parent device 30 may be a server device or computer device cormected to at least one forklift managing device 10 among a plurality of clients.

The forklift managing device 10 may include a main body built in a housing 20 and first and second antennas 21 and 22 connected to the main body. In order to connect the main body to the antennas 21 and 22 provided at the outside thereof, the forklift managing device 10 may be provided with first and second terminals 121 and 122 exposed to the main body or the housing 20.

Further, the forklift managing device 10 may include an RFID recognition terminal 123 provided in the main body to authenticate the operator in a near field communication scheme.

The forklift managing device 10 may be connected to a forklift controller to receive various forklift related information from the forklift controller and to transmit signals for forklift control to the forklift controller. The forklift related information may include sensor data obtained by collecting signals of various sensors equipped in the forklift, part history data created based on the sensor data, and other breakdown and repair history data.

According to the forklift managing device 10, the RFID tags 41 and 42 of a pedestrian approaching the forklift are recognized using the first and second antennas 21 and 22, so that it is possible to control functions of the forklift with a pedestrian recognition mode among various operation modes of the forklift as the primary mode.

According to the forklift managing device 10, the RFID card 43 or an RFID tag of the operator is recognized through the RFID recognition terminal 123 under multiple modes with the pedestrian recognition mode as the primary mode, so that it is possible to prevent misuse/abuse of the forklift through operator authentication.

Also, according to the forklift managing device 10, forklift management information received from the forklift controller is stored in a storage unit, to be used in maintenance/management or breakdown repair of the forklift when after-sales service, etc. is performed. Alternatively, the forklift management information is transmitted to the parent device 30, to efficiently manage the forklift or provide information necessary for the forklift managing device through collection of information on a plurality of forklifts in the parent device and access to various information related to maintenance/management or breakdown repair. Accordingly, efficient vehicle management is possible.

Also, according to the forklift managing device 10, task instructions are received from the parent device 30 through the wireless network, so that it is possible to efficiently manage and operate the forklift in a logistics warehouse or a cargo handling workplace.

Also, according to the forklift managing device 10, the RFID tags 41 and 42 attached to materials processed by the forklift or attached to material located near the forklift are recognized using the first and second antennas 21 and 22, and information acquired from the RFID tags 41 and 42 is transmitted to the parent device 30, so that efficient logistics management using the forklift is possible.

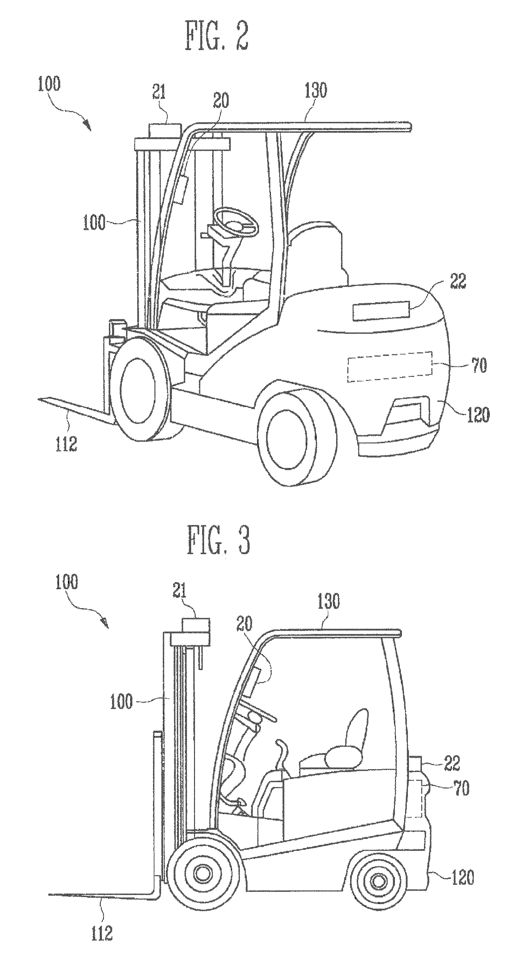

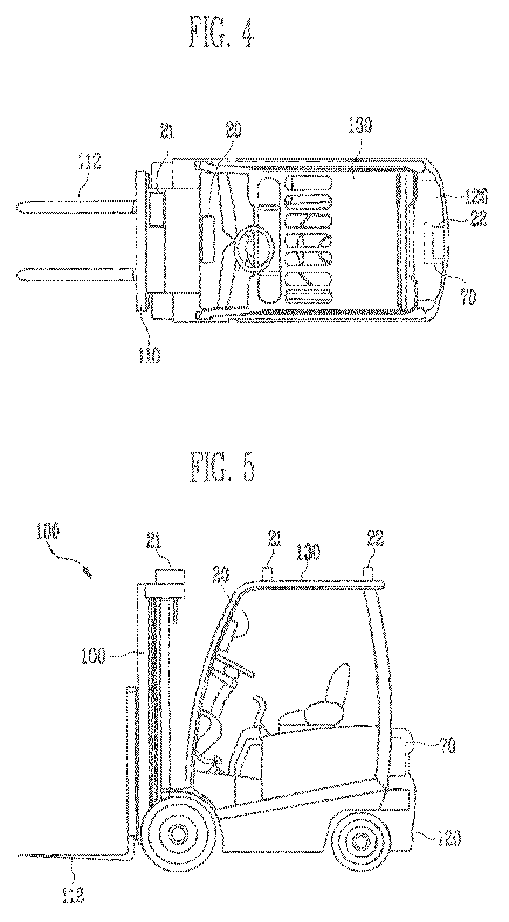

FIG. 2 is a perspective view of an embodiment of a forklift equipped with the forklift managing device of FIG. 1. FIG. 3 is a right side view of the forklift of FIG. 2. FIG. 4 is a plan view of the forklift of FIG. 3. FIG. 5 is a right side view of a modification of the forklift, equipped with the forklift managing device in FIG. 2.

Referring to FIGS. 2 to 4, the forklift 100 according to this embodiment includes a truck body, a task device, and the forklift managing device 10.

The truck body includes a counterweight 120, an overhead guard 130, and a vehicle device. The counterweight 120 is a device provided to add a predetermined weight at the backside of the truck body so as to prevent the center of gravity of the truck body from being excessively inclined by the weight of materials to be transported. The overhead guard 130 is a cover member covering the top of an operator's seat and protects an operator from an object falling from the upper level. The vehicle device includes a vehicle body of the forklift, a drive device required to move the vehicle body, and a forklift controller 70. The forklift controller 70 may include at least one electronic control unit (ECU) or inverter for hydraulic pressure and operation control of the forklift 100. The forklift controller 70 may be disposed at the backside of the truck body. The forklift, controller 70 may transmit information from various sensors installed in the forklift 100 as forklift related information to the forklift managing device 10.

The task device includes a mast 110 and forks 112. The mast 110 is provided in a structure of a plurality of vertical frames at the front side of the vehicle body, and is tilted in a freight transport task. The forks 112 are configured with L-shaped iron bars lifting up and down along the vertical frames.

The forklift managing device 10 may include a main body surrounded by a housing 20, a first antenna 21 connected to the main body, the first antenna 21 being disposed at the top of the mast 110, and a second antenna 22 disposed at the backside of the truck body or an upper portion of the counter weight 120.

It will be apparent that the first antenna 21 may be disposed at a front portion of the overhead guard 130, i.e., a portion of the overhead guard 130 adjacent to the mast 110, and the second antenna 22 may be disposed at a rear portion of the overhead guard 130, i.e., a portion of the overhead guard 130 adjacent to the counterweight 120 (see FIG. 5).

The first antenna 21 recognizes a pedestrian carrying an RFID tag or goods (freight, materials, etc.) to which an RFID tag is attached at a front or front side of the forklift 100. The second antenna 22 recognizes a pedestrian carrying an RFID tag or goods to which an RFID tag is attached at a rear or rear side of the forklift 100.

Meanwhile, the first antenna 21 may be provided in one or plurality at an upper or lower portion of the front (or front side) of the forklift 100. The second antenna 22 may be provided in one or plurality at an upper or lower portion of the rear (or rear side) of the forklift 100.

In this embodiment, in addition to the main body of the forklift managing device 10, a display device or user interface may be further installed in the housing 20. According to the above-described configuration, the forklift managing device 10 can display operator authentication related information, vehicle management related information, forklift task management related information, logistics management related information, forklift operation management information, other multimedia information or navigation information, etc., and receive user inputs.

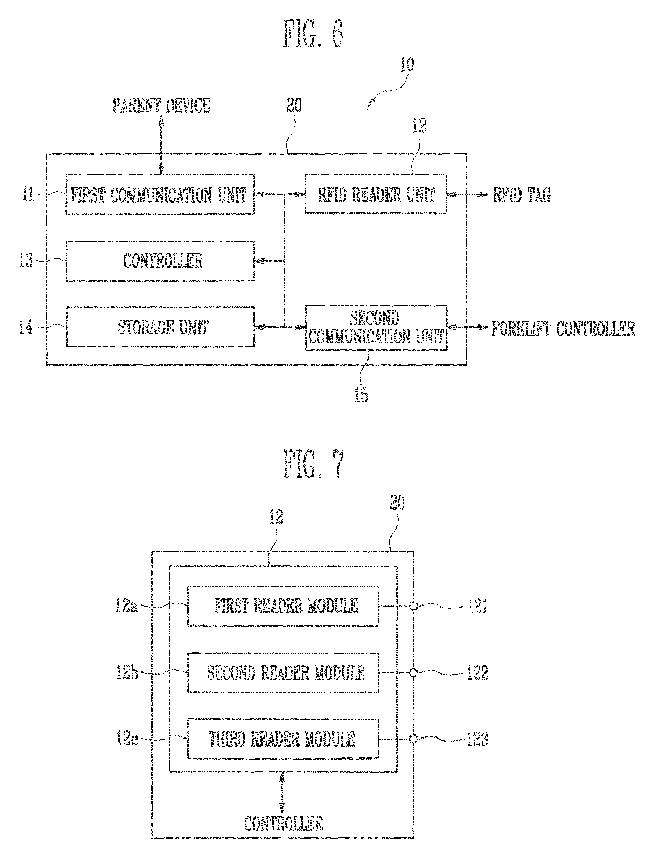

FIG. 6 is a block diagram of an embodiment of the forklift managing device of FIG. 1.

Referring to FIG. 6, the forklift managing device 10 according to this embodiment includes a first communication unit 11, an RFID reader unit 12, a controller 13, a storage unit 14, a second communication unit 15, and a housing 20.

The first communication unit 11 is a means for connecting the forklift managing device 10 to an external parent device 30, etc. through a network. The network includes a wired or wireless network. The first communication unit 11 may be connected to the parent device 30 through an external access point 32. In this case, the first communication unit 11 may be implemented as a WiFi wireless communication module that is a kind of near field communication device.

The first communication unit 11 transmits forklift management information stored in the storage unit 14 to the parent device 30. For example, the first communication unit 11 may transmit/receive data to/from a computer for management (corresponding to the parent device 30), which is disposed in an office, via the access point 32 disposed between the first communication unit 11 and the computer for management.

The RFID reader unit 12 is connected to a first antenna and a second antenna. The RFID reader unit 12 recognizes a surrounding pedestrian (or goods) possessing an RFID tag through two input terminals connected to the first and second antennas and transmits the recognized information to the controller 13. Also, the RFID reader unit 12 recognizes an operator possessing an RFID card through an RFID recognition terminal and transmits the recognized information to the controller 13. As described above, the RFID reader unit 12 activates a tag or reader by transmitting a radio wave to an RFID tag or RFID card, receives information of the tag or reader, and transmits the received information of the tag or reader to the controller 13.

The controller 13 controls each component part or each module of the forklift managing device 10. The controller 13 may sense an approach of a pedestrian on the basis of information of the RFID reader unit 12 and transmit a forklift operation stop control signal to a forklift controller.

Also, the controller 13 processes data related to forklift management and stores the processed data in the storage unit 14. The controller 13 may transmit forklift related information and operator identification related information to the parent device 30 and perform functions for operator authentication, forklift management, forklift operation management, and logistics management through data transmission/reception to/from the parent device 30. Here, operator identification related information may include information read from a predetermined RFID card at the RFID recognition terminal so as to perform operator authentication or an operator identifier included in the information.

In the former case, the controller 13 may serve as middleware that processes information received from the forklift controller or the RFID reader unit 12 and transmits the processed information to the parent device 30. The information processing of the middleware includes data filtering, etc.

The storage unit 14 is connected to the controller 13 and stores forklift management information. The storage unit 14 may store operator identification information or operator reference information to be compared with operator information, obtained through the RFID recognition terminal.

The second communication unit 15 is a means for communication inside the forklift or a component part that performs a function corresponding to the means. The second communication unit 15 may connect the controller 13 of the forklift managing device 10 to the forklift controller and transmit/receive control data to/from the forklift controller. The second communication unit 15 may include a controller area network (CAN) data communication module, but the present invention is not limited thereto.

The housing 20 supports or surrounds at least one of the first communication unit 11, the RFID reader unit 12, the controller 13, the storage unit 14, the second communication unit 15, the first terminal, the second terminal, and the RFID recognition terminal.

FIG. 7 is a block diagram of an embodiment of the RFID reader unit of FIG. 6.

Referring to FIG. 7, the RFID reader unit 12 of the forklift managing device according to this embodiment includes a first reader module 12a, a second reader module 12b, a third reader module 12c, a first terminal 121, a second terminal 122, and an RFID recognition terminal 123.

The first reader module 12a is connected to the first antenna. The first antenna (21 of FIG. 5) connected to the first reader module 12a may transmit a radio wave to an RFID tag located at one side (front or front side) of the forklift to activate the tag and receive information of the tag. Also, the first reader module 12a may be attachably/detachably connected to the first antenna through the first terminal 121 coupled to, supported by, or exposed to the housing 20. In this case, the first terminal 121 may be implemented as a first connector attachably/detachably coupled to a connector at the end of a wire connected to the first antenna.

The second reader module 12b is connected to the second antenna. The second antenna (22 of FIG. 5) connected to the second reader module 12b may transmit a radio wave to an RFID tag located at the other side (rear or rear side) of the forklift to activate the tag and receive information of the tag. Also, the second reader module 12b may be attachably/detachably connected to the second antenna through the second terminal 122 coupled to, supported by, or exposed to the housing 20. In this case, like the first terminal 121, the second terminal 122 may be implemented as a second connector attachably/detachably coupled to a connector at the end of a wire connected to the second antenna.

The third reader module 12c activates a tag in a predetermined RFID card possessed by an operator, etc. and receives information of the tag. The third reader module 12c may receive information of the RFID card through the RFID recognition terminal 123 coupled to, supported by, or exposed to the housing 20. A recognition distance of the third reader module 12c for tag information reception may be smaller than that of the first reader module 12a or the second reader module 12b. In this case, the third reader module 12c may activate only a tag in an RFID card coming very close to the RFID recognition terminal 123 and receive information of the tag.

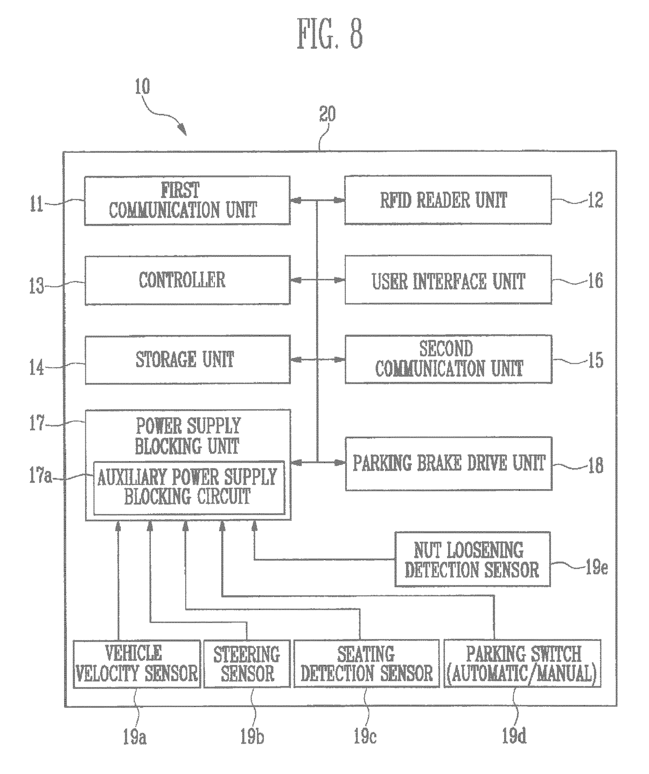

FIG. 8 is a block diagram of another embodiment of the forklift managing device of FIG. 1.

Referring to FIG. 8, the forklift managing device 10 according to this embodiment includes a first communication unit 11, an RFID reader unit 12, a controller 13, a storage unit 14, a second communication unit 15, a user interface unit 16, a power supply blocking unit 17, an auxiliary power supply blocking circuit 17a, an alarm output unit, a parking brake drive unit 18, and a housing 20. Further, the forklift managing device 10 may include a vehicle velocity sensor 19a, a steering sensor 19b, a seating detection sensor 19c, a parking switch 19d, and a nut loosening detection sensor 19e.

The forklift managing device 10 of this embodiment is substantially identical to the forklift managing device described with reference to FIG. 6 except the user interface unit 16, the power supply blocking unit 17, the auxiliary power supply blocking circuit 17a, the alarm output unit (not shown), and the parking brake drive unit 18. Therefore, detailed descriptions of the first communication unit 11, the RFID reader unit 12, the controller 13, the storage unit 14, and the second communication unit 15 will be omitted to avoid redundancy.

The user interface unit 16 is connected to the controller 13 and outputs information from the controller 13. The user interface unit 16 may display event information on pedestrian recognition information, vehicle management information, forklift task management information, logistics management information, forklift operation management information, etc. Also, the user interface 16 may be provided to receive user inputs. In this case, the user interface unit 16 may be one (touch panel, etc.) including a bidirectional interface.

The power supply blocking unit 17 is connected to the controller 13 and blocks a power supply of the forklift in response to a control signal of the controller 13. The power supply blocking unit 17 may be implemented as an electronic switch device disposed between a vehicle battery mounted in the forklift and an ignition key. The electronic switch device may include an electronic relay that separate a terminal connecting between power supply wires from the power supply wires in response to a control signal of the control unit 13.

If the power supply blocking unit 17 is used, the controller 13 activates the power supply blocking unit 17 when operator information is normally recognized through a signal from the RFID reader unit 12 to allow a corresponding operator to operate the forklift, and non-activates the power supply blocking unit 17 when the operator information is abnormally recognized through the signal from the RFID reader unit 12 to block (or maintain blocking of) a power supply wire, thereby preventing an arbitrary operator from operating the forklift.

The auxiliary power supply blocking unit 17a is an element for preventing an operator from being injured due to sudden stop of the forklift when an operation stop control signal is transmitted from the controller 13 to the forklift controller as a pedestrian is recognized. The auxiliary power supply blocking unit 17a may be implemented as one switch that activates an operation in which the controller 13 transmits the operation stop control signal.

For example, the auxiliary power supply blocking unit 17a may include a seat belt wearing detection circuit of the forklift. The seat belt wearing detection circuit may include a switch having an on state or an activation state (including an off state) when an operator's seat belt of the forklift is normally worn. In this case, the controller 13 may be implemented such that the operation stop control signal is transmitted to the forklift controller by operating the auxiliary power supply blocking circuit 17a when the seat belt wearing detection circuit of the forklift is in the on state or the activation state.

According to the above-described configuration of the auxiliary power supply blocking circuit 17a, in a case where a variation per unit time of a signal input to the RFID reader unit 12 is greater than a reference value or in a case where an intensity (e.g., an electric field density) of the input signal is greater than a reference value, the controller 13 may determine the case as a preset first situation (including collision prediction) on an approach of a pedestrian and transmit the operation stop control signal to the forklift controller through the second communication unit. It will be apparent that, in a case where a variation per unit time of a signal input to the RFID reader unit 12 is equal to or smaller than a reference value or in a case where an intensity of the input signal is equal to or smaller than a reference value, the controller 13 may determine the case as a preset second situation on an approach of a pedestrian and output an alarm signal to the outside through the alarm output unit.

The alarm output unit is one implemented as the existing speaker, etc. The alarm output unit is connected to the controller 13, and outputs an alarm signal when an approach of a pedestrian is recognized through the RFID reader unit 12. The alarm output unit may be implemented as a means for outputting an alarm signal such as sound or light in response to a control signal of the controller 13. In addition, the alarm output unit may be implemented as a means for outputting an alarm generation command to a pedestrian alarm device integrally installed in a case of an RFID tag possessed by a pedestrian to output an alarm signal. In this case, the pedestrian alarm device may be implemented as a speaker, a light emitting device, etc., which receives a wireless control signal and outputs an alarm.

The forklift managing device 10 may further include at least one of a first cushion unit and a second cushion unit. In this case, the first cushion unit is, as a selective component, a means for protecting an operator boarding on the forklift by deploying a first cushion inside the forklift or a component part for performing a function corresponding to the means. The first cushion unit may be implemented to include a device similar to a vehicle airbag operating when a predetermined amount or more of impact is applied to a vehicle, and a device for driving the same. In this case, when the operation stop control signal is transmitted, the controller 13 may operate to activate the first cushion unit that deploys the first cushion for protecting the operator of the forklift inside the forklift.

In addition, the second cushion unit is, as a selective component, a means for protecting a pedestrian approaching the forklift by deploying a second cushion at the outside of the forklift or a component part for performing a function corresponding to the means. The second cushion unit may be implemented to include a device similar to a vehicle airbag operating when a predetermined amount or more of impact is applied to a vehicle, and a device for driving the same. Particularly, unlike the vehicle airbag, the second cushion unit of this embodiment may be implemented to operate in response to a control signal of the controller 13. In this case, when the operation stop control signal is transmitted, the controller 13 may operate to activate the second cushion unit that deploys the second cushion for protecting a pedestrian near the forklift at the outside (or a side or rear of the forklift) of the forklift.

The second cushion unit may be provided at each of a left side, a right side, and a rear of the forklift so as to protect a pedestrian when the forklift collides with the pedestrian at each of the outsides of the left side, right side, and rear of the forklift. In this case, the controller 13 may operate to activate at least one second cushion unit located in a direction most adjacent to the position of a pedestrian, based on installation positions of RFID reader units of the RFID reader unit 12, which sense the pedestrian with different intensities or an arrangement relationship between the RFID readers of the RFID reader unit 12.

The parking brake drive unit 18 is a device that drives a parking brake unit in response to a control signal of the controller 13, and may be implemented as a solenoid, etc. Here, the controller 13 may generate a control signal for controlling the parking brake drive unit 18, based on signals of the seating detection sensor 19c installed in an operator's seat to detect whether the operator sits on the operator's seat of the forklift and a parking switch 19d that inputs, to the controller 13, a signal for allowing the operator to manually operate the parking brake unit or to release the parking brake unit being operated.

An automatic parking brake function through the parking brake drive unit 18 and an operating process thereof will be described in detail as follows.

First, the seating detection sensor 19c is inserted and installed into the operator's seat to detect whether the operator sits on the operator's seat of the forklift and transmit the detected signal to the controller 13. In addition, the parking switch 19d inputs, to the controller 13, a signal for allowing the operator to manually operate a parking brake before the operator leaves the operator's seat or to manually release the parking brake being operated after the operator returns to sit on the operator's seat.

According to an embodiment, when it is detected by the seating detection sensor 19c that the operator leaves the operator's seat in a mode in which the operator manually operate the parking brake by using the parking switch 19d or in an automatic parking brake operation mode in which the parking brake being operated is not released, a timer (not shown), which can be built in the controller 13, may perform a function of allowing the controller 13 to determine whether the detected time is a predetermined time or more. Here, the time t required for the timer to determine that the operator has left the operator's seat is set to 2 to 3 seconds. This is because the seating detection sensor 19c may detect a state in which, although the operator operates the forklift while normally sitting on the operator's seat, the operator repeatedly leaves and sits on the operator's seat due to impact applied when the forklift passes through unevenness, and transmit the detected state to the controller 13.

That is, although the seating detection sensor 19c detects a signal determined that the operator has left the operator's seat and transmits the detected signal to the controller 13, if the corresponding signal is not continued for the time of 2 to 3 seconds set by the timer, the controller 13 recognizes that the seating detection sensor has detected an unstable signal due to unevenness, etc., through which the forklift passes, and blocks an automatic operation of the parking brake, thereby preventing, in advance, malfunction caused by a misunderstanding about that the operator leaves the operator's seat during the operation of the forklift.

Meanwhile, when a signal determined that the operator has sit on the operator's seat and a signal determined that the operator has left the operator's seat, which are continuously output through the seating detection sensor 19c inserted and installed into the operator's seat, the signal determined that the operator has left the operator's seat is input from the seating detection sensor 19c. Then, if the state in which the operator leaves the operator's seat is equal to or greater than the time set by the timer, the controller 13 confirms and determines that the operator has left the operator's seat and immediately operates the parking brake drive unit 18 such that the parking brake unit of the forklift can be automatically operated (locked).

In addition, if the signal determined that the operator has sit on the operator's seat is input from the seating detection sensor 19c while the parking brake is being operated in an automatic mode, the controller 13 blocks the driving of a solenoid for brake operation such that the parking brake of the forklift can be automatically released.

Meanwhile, unlike the conventional forklift having a manual parking brake system, the parking brake drive unit 18 serves as a means that is additionally installed in the parking brake unit and generates power required to operate the parking brake unit or release the parking brake unit being operated in response to a control signal (e.g., a solenoid drive signal or operation release signal) output from the controller 13.

If the automatic parking brake function is applied to the forklift as described above, the parking brake unit can be automatically operated when the operator of the forklift leaves the operator's seat for a predetermined time or more. Further, the operator releases the parking brake unit by operating the parking switch 19d when the operator again sits on the operator's seat, so that it is possible to enhance user convenience. In addition, it is possible to prevent, in advance, a safety accident that may occur as the operator gets off the forklift without manually operating the parking brake unit due to operator's carelessness, thereby remarkably improving safety in the operation of the forklift.

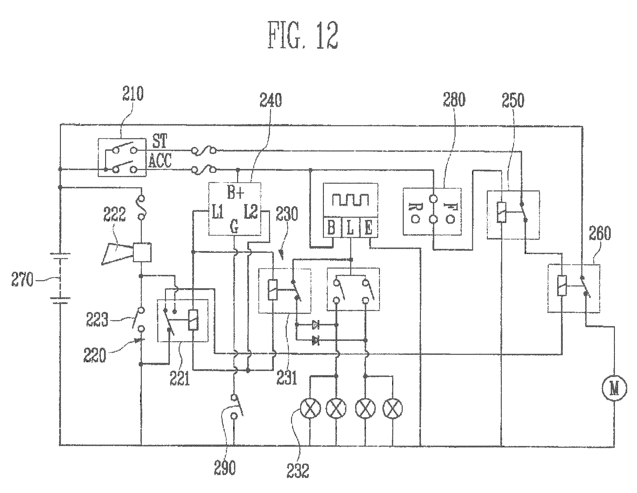

According to an embodiment, the controller 13 may be implemented to, in an on state of an ignition switch (see 210 of FIG. 12), display a task state and a forklift state in the user interface unit 16 under the pedestrian recognition mode and to, in an off state of the ignition switch, display a parking or stopping state in the user interface unit 16 for a certain time.

In addition, according to an embodiment, the controller 13 may detect the on or off state of the ignition switch under the pedestrian recognition mode, detect an on state of the seating detection sensor 19c (that may correspond to the following seat switch), and release an alarm buzzer (see 222 of FIG. 12), set an driving function to a feasible state, or set a task device function to the feasible state. Here, when both the ignition switch and the seat switch are in the off state, the controller 13 detects whether an operation switch of the parking brake unit (or the parking brake) is in the on state. If the operation switch of the parking brake is in the off state, the controller 13 may output an alarm signal. Also, when the ignition switch is in the on state and the seat switch is in the off state, the controller 13 detects whether a gear neutral signal and the operation switch of the parking brake are in the on state. If the gear neutral signal and the operation switch of the parking brake are in the off state, the controller 13 maybe implemented to output an alarm signal and to block the driving function and the task device function.

Referring back to FIG. 8, the forklift managing device 10 according to this embodiment may include the vehicle velocity sensor 19a, the steering sensor 19b, the seating detection sensor 19c, the parking switch 19d, and the nut loosening detection sensor 19e. The vehicle velocity sensor 19a is a device attached to a drive motor of a transmission of the forklift to generate a binary coded decimal (BCD) code, thereby inputting a sensing signal to the forklift controller. The vehicle velocity sensor 19a may be implemented as a Hall effect sensor, an optical sensor, a magnetic sensor, etc. The steering sensor 19b is used to measure a torque applied to a steering shaft or measure a rotation angle of the steering shaft and to transmit the measured torque or rotation angle to the forklift controller. The steering sensor 19b may be referred to as a steering torque sensor or a steering angle sensor. The steering sensor 19b may be attached to a power steering device of the forklift, but the present invention is not limited thereto.

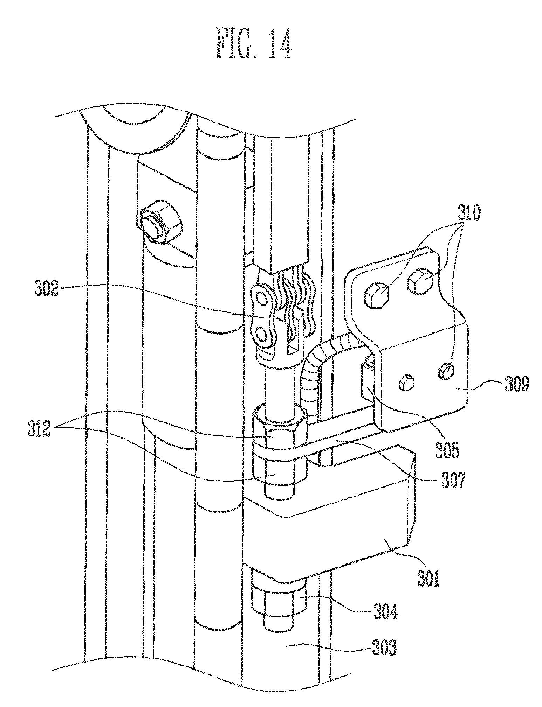

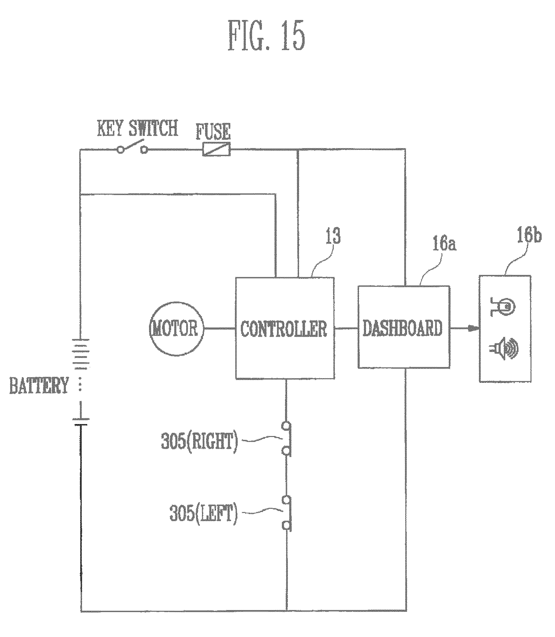

The nut loosening detection sensor 19e detects a loosened state of a fixing nut for fixing a chain to a left chain fixing part and a right chain fixing part. The nut loosening detection sensor 19e will be described in detail below (see FIGS. 14 and 15).

The housing 20 may be implemented to support or surround at least one of the first communication unit 11, the RFID reader unit 12, the controller 13, the storage unit 14, the second communication unit 15, the user interface unit 16, the power supply blocking unit 17, the auxiliary power supply blocking circuit 17a, the alarm output unit, the parking brake drive unit 18, the first terminal, the second terminal, and the RFID recognition terminal. However, the present invention is not limited thereto, and the housing 20 may be implemented to support or surround some components. Also, according to an embodiment, the housing 20 may be combined with a housing of a display device or a housing of a navigation device.

Meanwhile, the vehicle velocity sensor 19a, the steering sensor 19b, the seating detection sensor 19c, the parking switch 19d, and the nut loosening detection sensor 19e are not included in the forklift managing device 10, but each may be installed at a predetermined position of the forklift to transmit a sensing signal to the forklift controller. In this case, the forklift managing device 10 may be connected to the forklift controller to receive a signal of a corresponding sensor or switch. That is, the vehicle velocity sensor 19a, the steering sensor 19b, the seating detection sensor 19c, the parking switch 19d, and the nut loosening detection sensor 19e may be replaced with a plurality of input ports for receiving signals of sensors or switches, transmitted from the forklift controller.

A forklift using the forklift managing device according to this embodiment may be equipped with various functions. For example, the forklift may be equipped with an automatic parking brake function, a forklift overturn prevention control function, a function of proximity alarm prior to ignition of the forklift, a function of detecting a loosened chain fixing nut of the forklift, and the like.

Hereinafter, some major function capable of being integrally managed by the forklift, managing device of this embodiment will be described in detail.

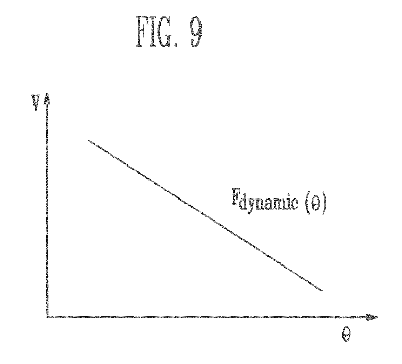

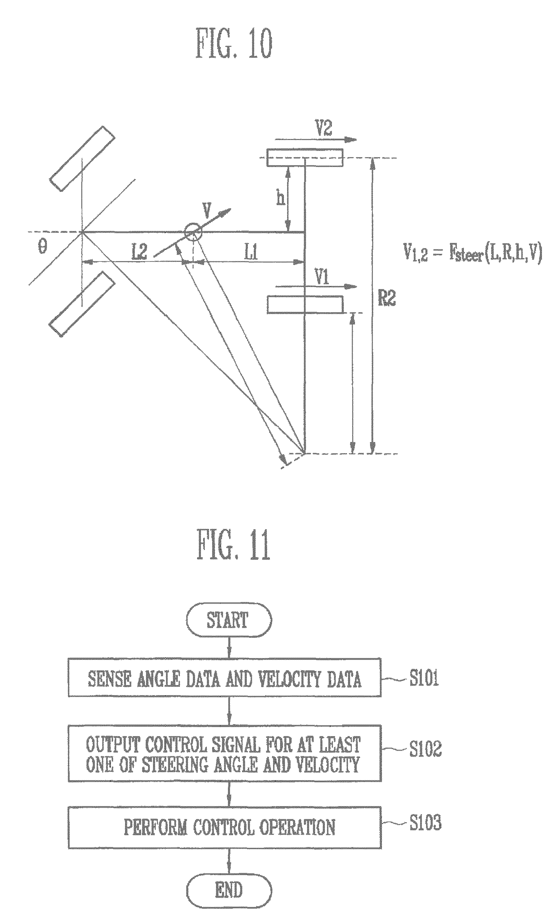

FIG. 9 is a graph illustrating a dynamic model applied to forklift overturn prevention control provided in the forklift managing device of FIG. 8. FIG. 10 is a view illustrating a relation function between steering angle and vehicle velocity in the forklift managing device of FIG. 8.

Referring to FIG. 9, the dynamic model may be modeled on the basis of dimensional information including at least one of a weight, the center of gravity, a vehicle body length, a vehicle body height, and a length between front and rear wheels of a corresponding forklift. Here, the correlation between steering angle and velocity may correspond to a relation function between steering angle and velocity, which is calculated on the basis of a dynamic model created by receiving steering angles and velocities (vehicle velocities) of the forklift.

That is, the relation function between steering angle and velocity may correspond to a relation function between velocity and steering angle with respect to each of a plurality of driving devices. For example, a velocity V of each of two front wheels of the forklift may be expressed as a relation function of factors (e.g., a steering velocity) constituting the dimensional information. In FIG. 9, a velocity V of the forklift has an inverse proportional relation with a steering angle θ, and may be expressed in the form of F_{dynamic}(θ) as a straight line having a predetermined inclination.

Referring to FIG. 10, the velocity of each of the plurality of driving devices is expressed as a relation function of steering angle. Here, the velocity of a forklift may be calculated as a relation function of steering angle on the basis of a dynamic model created according to dimensional information of the corresponding forklift. Also, the steering angle of a forklift may be represented as a relation function of velocity on the basis of a dynamic model created according to dimensional information of the corresponding forklift.

In this case, the controller (see 13 of FIG. 8) may generate a control signal for at least one of the steering angle and velocity of the forklift according to a correlation between steering angle and velocity, previously set with respect to the forklift, on the basis of angle data and velocity data, which are respectively sensed by the vehicle velocity sensor and the steering sensor.

For example, the controller may generate a control signal including at least one of a steering control signal related to the limitation of the range of steering angles of a steering device and a velocity control signal related to a change in velocity of each of the plurality of driving devices. In addition, the controller may control a current steering angle of the rear wheels and a velocity of each of the two front wheels such that the forklift is not turned over, on the basis of the relation function between steering angle and velocity, calculated through the dynamic model. Here, the controller may output a steering control signal for limiting the range of steering angles, or may output a velocity control signal for decreasing the velocity of each of the two front wheels by a predetermined unit.

According to an embodiment, the controller may receive dimensional information on the forklift to generate a control signal for at least one of a velocity limit and a change in velocity within the range of steering angles according to the relation function between steering angle and velocity.

Meanwhile, if the forklift managing device 10 equipped with the forklift overturn prevention control function is installed in a forklift, and dimensional information of the corresponding forklift is changed, the forklift managing device 10 may receive the corresponding dimensional information input through an input means, to generate and output a control signal through a relation function between steering angle and velocity, which is calculated on the basis of a dynamic model created according to the changed dimensional information. In this case, a steering device drive unit or an driving device drive unit may be disposed between the steering device or driving device and the controller. The drive unit may be implemented to perform a control operation for at least one of steering angle and vehicle velocity in response to a control signal of the controller. That is, the steering device drive unit may perform control on the steering device in response to a steering control signal of the controller. For example, the steering device drive unit may limit the range of steering angles under control of the controller. In addition, the driving device drive unit may perform control on the driving device in response to a velocity control signal of the controller. For example, the driving device drive unit may decrease the velocity of the forklift.

FIG. 11 is a flowchart illustrating a forklift overturn prevention control process of the forklift managing device of FIG. 8.

Referring to FIG. 11, in the forklift managing device according to this embodiment, the vehicle velocity sensor and the steering sensor (hereinafter, briefly referred to as a 'sensor unit') sense angle data on a steering angle of the forklift and velocity data on a vehicle speed of the forklift (S101).

The step (S101) will be described in detail. The sensor unit may be connected to a steering angle detection means connected to the steering device of the forklift. Here, the sensor unit may sense, as angle data, an output signal corresponding to a steering angle changed at a predetermined reference position through movement of a steering wheel or steering joystick from the steering angle detection means. Also, the sensor unit may be connected to a velocity detection means connected to the driving device of the forklift to detect a velocity corresponding to a current velocity. Here, the sensor unit may sense, as velocity data, an output signal corresponding to a current velocity from the velocity detection means.

Next, the controller outputs a control signal for at least one of steering angle and velocity of the forklift according to the correlation between steering angle and velocity in the forklift on the basis of the angle data and the velocity data from the sensor unit (S102). At least one of the steering device drive unit and the driving device drive unit performs a control operation on at least one of the steering device and the driving device in response to a control signal of the controller (S103), and accordingly, it is possible to prevent an overturn of the forklift. That is, in order to prevent an overturn of the forklift, the controller (see 13 of FIG. 8) receives the angle data and the speed data from the sensor unit, and controls at least one of steering angle and velocity according to the correlation between steering angle and velocity, previously defined with respect to the forklift on the basis of a current steering angle and a current velocity of the forklift.

FIG. 12 is a circuit diagram illustrating a function of proximity alarm prior to ignition in the forklift equipped with the forklift managing device of FIG. 8.

The function of proximity alarm prior to ignition is used to recognizably alarm an operator adjacent to the forklift in a visual and auditory manner before the ignition of the forklift is started, thereby preventing, in advance, the occurrence of a safety accident.

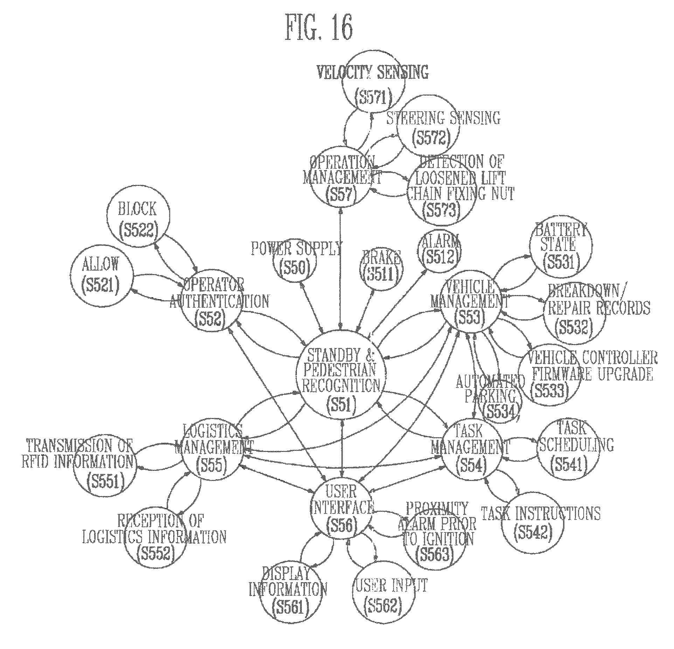

To this end, the controller (see 13 of FIG. 8) of the forklift managing device may control various types of vehicle equipped devices (an ignition switch, a first relay, a second relay, an ignition relay, and the like) under the pedestrian recognition mode (see S51 of FIG. 16) in linkage with the forklift controller.

The function of proximity alarm prior to ignition will be described in detail with reference to FIG. 12. The forklift equipped with the forklift managing device may include an ignition switch 210 receiving power supplied from a power supply unit 270 for supplying power to each device required in an operation of the forklift, the ignition switch 210 being switched by manipulation of an operator, an alarm sound generation unit 220 having a first relay 221 that forms a path through which the power supplied from the power supply unit 270 is supplied to a horn 222 provided in the forklift when the ignition switch 210 is switched to an on (ACC) state, a lamp unit 230 having a second relay 231 that forms a path through which the power supplied from the power supply unit 270 is supplied to an alarm lamp 232 provided in the forklift when the ignition switch 210 is switched to the on (ACC) state, thereby operating the alarm lamp 232, a timer 240 operating such that the power is supplied to the alarm sound generation unit 220 and the lamp unit 230 for only a set time when the ignition switch 210 is switched to the on (ACC) state, and an ignition relay 260 receiving an electrical signal input through a neutral relay 250 operated by the switch of the ignition switch 210 to the on (ACC) state to allow an ignition motor M to be operated when the ignition switch is switched to an ignition position (ST). A fuse 280 may be provided between the ignition switch 210 and the neutral relay 250.

Here, the forklift may further include a select switch 290 enabling an operator to select whether an operation of the alarm sound generation unit 220 or the lamp unit 230 is performed. In this case, the select switch 290 is provided to allow an electrical signal applied to the alarm sound generation unit 220 and the lamp unit 230 to be opened/closed by manipulation of the operator through the timer 240, so that the operator can select whether the operation of an alarm device is performed.

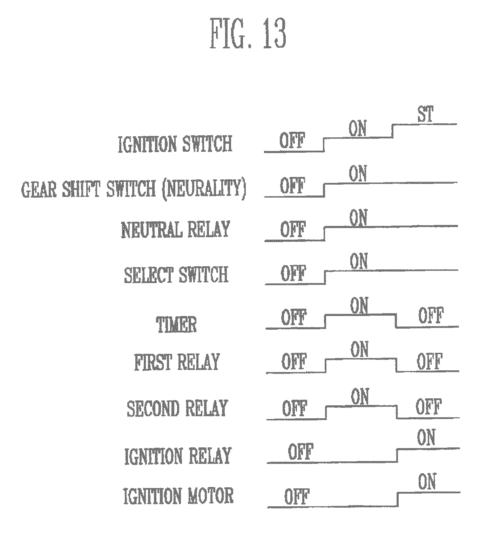

FIG. 13 is a timing diagram illustrating an ignition sequence of a circuit of FIG. 12.

Referring to FIGS. 12 and 13, if an operator boarding the forklift (see 100 of FIG. 2) puts a gear shift switch in a neutral state and switches the ignition switch 210 to the on (or ACC) state, an electrical signal is transmitted to the timer 240 and the neutral relay 250. At this time, the neutral relay 250 forms a circuit for supplying power to the ignition relay 260, and the signal transmitted to the timer 240 is transmitted to the alarm sound generation unit 220 and the lamp unit 230.

The signal transmitted to the alarm sound generation unit 220 forms a circuit for supplying power to the horn 222 by operating the first relay 221 for a predetermined time, so that an alarm sound is generated by the horn 222 and the power supplied to the horn 222. In addition, the signal transmitted to the lamp unit 230 forms a circuit for supplying power to the alarm lamp 232 by operating the second relay 231 for a predetermined time, so that the alarm lamp 232 is lighted. In this case, a worker approaching a forklift can recognize whether the operation of the corresponding forklift is started through the operation of the horn 222 and the alarm lamp 232, and keep away from a danger area within the task radius of the forklift.

Meanwhile, if the ignition switch 210 is switched to the ignition position (ST) by the operator, an electrical signal corresponding to the switch of the ignition switch 210 is transmitted to the ignition relay 260 through the neutral relay 250, to form a circuit for supplying power to the ignition motor M. The ignition motor M is operated by the supplied power, thereby operating an engine (not shown).

According to this embodiment, after the power of the forklift is in the on state, the forklift managing device can effectively provide workers near the forklift with a safety alarm message corresponding to an operation of the forklift in the form of lighting and sound before the ignition of the forklift is started under a standby and pedestrian recognition mode.

FIG. 14 is a partial enlarged perspective view of a lift of the forklift, illustrating a function of detecting a loosened lift chain fixing nut in the forklift equipped with the forklift managing device of FIG. 8. FIG. 15 is an electrical connection view illustrating the function of FIG. 14.

The controller (see 13 of FIG. 8) of the forklift managing device according to this embodiment may detect a loosened lift chain fixing nut of the forklift according to a signal from the nut loosening detection sensor (see 19e of FIG. 8). Here, the nut loosening detection sensor may corresponding to the following monitoring switch 305.

The installation position and connection relation of the monitoring switch for the function of detecting a loosened lift chain fixing nut in the forklift managing device will be described as follows.

That is, as shown in FIG. 14, in a forklift in which an anchor bolt 303 connected to end portions of a left lift chain (not shown) and a right lift chain 302 is coupled to a mast 301 and fixed with fixing nut 304 so as to operate forks and a carriage of the forklift, nut loosening monitoring switches 305 are provided at left and right side portions of the mast 301, respectively. The two nut loosening monitoring switches 305 are connected in series to one power input line of the controller 13 (or forklift controller). An actuator plate 307 is fixedly provided at an upper portion of the anchor bolt 303. Here, the actuator plate 307 allows the nut loosening monitoring switch 305 maintaining an always-on state to be switched to an off state when the fixing nut 304 is loosened, so that the operation of equipments is automatically stopped through blocking of a power voltage applied to the controller 13. In this case, the nut loosening monitoring switch 305 may be fixedly provided to the mast 301 through a protective bracket 309 and a plurality of bolts 310.

In addition, as shown in FIG. 15, a dashboard 16a of the forklift may further include an alarm message generation means 16b that generates an alarm message to an operator when the controller 13 recognizes that the fixing nut 304 has been loosened. In this case, the alarm message generation means 16b may be a means for outputting an alarm or alarm lamp or a component part for performing a function corresponding to the means. Also, the alarm message generation means 16b may be implemented such that, if it is operated once, a nut loosening monitoring operation is stopped only when the power voltage is normally applied to the controller 13 as both the two nut loosening monitoring switches 305 are returned to the on state because the lift chain fixing nut 304 in the loosened state is again tightened.

In a structure for implementing the function of detecting a loosened lift chain fixing nut, the forklift may be configured such that the anchor bolt 303 is connected to the end portions of the left and right lift chains 302 provided to operate the forks and the carriage and coupled to the mast 301 by being inserted into a hole punched in the mast 301, and the plurality of fixing nuts 304 are then coupled to upper and lower portions of the mast 301, thereby fixing one end portion of the lift chain to the mast 301.

According to the above-described, if the actuator plate 307 provided to switch the nut loosening monitoring switch 305 to the off state is used, the power voltage is normally applied to the controller 13 as the nut loosening monitoring switch 305 maintains the on state in a state in which the fixing nut 304 is normally tightened. As the actuator plate 307, which has a state in which the actuator plate 307 is fixed to an upper portion of the anchor bolt 303 through nuts 312, when any one of the left and right lift chain fixing nuts 304 is loosened, switches the nut loosening monitoring switch 305 at a corresponding position to the off state, the power voltage applied to the controller 13 is blocked, so that the operation of equipments controlled by the controller 13 can be automatically stopped.

That is, according to this embodiment, it is possible to prevent, in advance, separation of the lift chain 302, which may occur when the forklift is continuously operated in a state in which the fixing nuts 304 coupled to the anchor bolt 303 to fix the lift chain 302 to the mast 301 are partially loosened, damage of handling materials due to falling of the forks and the carriage, or the occurrence of a safety accident. Further, since the nut loosening monitoring switch 305 is mechanically very weak against external impact, etc., in this embodiment, the nut loosening monitoring switch 305 is fixed to the protective bracket 309 and then fixedly provided to the mast 301 through the plurality of bolts 310, so that it is possible to effectively prevent the nut loosening monitoring switch 305 from being damaged due to impact, etc., which may be applied from the outside.

FIG. 16 is a state transition view illustrating an operation principle of the forklift managing device of FIG. 8.

Referring to FIG. 16, when a power supply or standby power supply of the forklift is in an applied state or on state (S50), the forklift managing device according to this embodiment activates a pedestrian recognition mode (S51) as the primary mode with a standby mode.

The pedestrian recognition mode (S51) as the standby mode may be shifted to any one mode among multiple modes including an operator authentication mode (S52), a vehicle management mode (S53), a task management mode (S54), a logistics management mode (S55), a user interface mode (S56), and an operation management mode (S57), or may be returned from the shifted mode. Here, the operator authentication mode (S52) may be shifted to or returned from the user interface mode (S56), the vehicle management mode (S53) may be shifted to or returned from the task management mode (S54), the logistics management mode (S55) or the user interface mode (S56), the task management mode (S54) may be additionally shifted to or returned from the logistics management mode (S55) or the user interface mode (S56), and the logistics management mode (S55) may be additionally shifted to or returned from the user interface mode (S66). In addition, the operation management mode (S57) may be shifted to or returned from the vehicle management mode (S53), the task management mode (S54), the logistics management mode (S55) or the user interface mode (S56). In FIG. 16, connection relations indicated by arrows with respect to mutual shifts or returns are omitted for convenience of illustration.

If a pedestrian approaching the forklift is recognized through the RFID reader unit regardless of movement of the forklift while the pedestrian recognition mode (S51) is being activated, the forklift managing device transmits a vehicle braking command or operation stop control signal to the forklift controller (S511) or outputs an alarm signal through the alarm output unit (S512), based on a change in pedestrian approach signal. It will be apparent that the forklift managing device may be implemented not to transmit the vehicle braking command or output the alarm signal when there is no movement of the forklift.

That is, in the pedestrian recognition mode (S51) as the primary mode, the forklift managing device may output an alarm message to an operator near the forklift through a function of proximity alarm prior to ignition (S563) before the ignition of the forklift is started, or may output an alarm signal to the operator through the alarm output unit or transmit an operation stop control signal to the forklift controller through the second communication unit when a pedestrian approaching the forklift is recognized through a signal from the RFID reader unit. In the pedestrian recognition mode (S51), the forklift managing device performs velocity sensing (S571), steering sensing (S572) and detection of a loosened lift chain fixing nut (S573) on the forklift, and accordingly, it is possible to effectively promote safety of workers and safe tasks of the forklift.

Next, an operation mode of each mode will be described in detail as follows.

If the operator takes an RFID card in the vicinity of the RFID recognition terminal so as to operate the forklift, the forklift managing device compares operator information acquired through the RFID reader unit with reference information in the storage unit or reference information of the parent device. Then, the forklift managing device allows an operation of the forklift in normal authentication (S521), and blocks the operation of the forklift in abnormal authentication (S522).

Under the pedestrian recognition mode (S51), the forklift managing device proceeds to the vehicle management mode (S53) when a user input is provided or for every period set by a user input, and stores battery state information (a battery remaining amount, etc.) in the storage unit (S531), processes data (forklift related information) received from the forklift controller and store the processed data in the storage unit so as to generate and manage breakdown/repair records (S532), upgrades firmware of the forklift controller as firmware received from the parent device under a wireless network environment (S533), or automatically park the forklift according to whether the operator is separated from the forklift or whether the operator leaves the operator's seat except when the operator perform an operation while sitting on the operator's seat (S534).

Under the pedestrian recognition mode (S51), the forklift managing device proceeds to the task management mode (S54) according to a push event from the parent device, and transmits/receives data related to task scheduling through communication with the parent device (S541) or receives a task instruction transmitted in real time from the parent device (S542).

Under the pedestrian recognition mode (S51), the forklift managing device proceeds to the logistics management mode (S55) through linkage with the parent device, and transmits information (RFID information) received from the RFID tag to the parent device under the logistics management mode (S551) or receives logistics related information (logistics information) from the parent device (S552).

Under the pedestrian recognition mode (S51), the forklift managing device proceeds to the operation management mode (S57), and simultaneously performs at least one function among the velocity sensing (S571), the steering sensing (S572) and the detection of a loosened lift chain fixing nut (S573). Here, the forklift managing device may transmit/receive signals or data in linkage with the forklift controller when necessary.

The pedestrian recognition mode (S51), the operator authentication mode (S52), the vehicle management mode (S53), the task management mode (S54), the logistics management mode (S55), or the operation management mode (S57) proceeds to the user interface mode (S56) when an event occurs due to a predetermined signal or an input/output of data, and displays information generated by the corresponding event in the user interface mode (S561) or receives a user input through a bidirectional interface (S562). In the user interface mode (S56), the pedestrian recognition mode (S51), the operator authentication mode (S52), the vehicle management mode (S53), the task management mode (S54), the logistics management mode (S55), or the operation management mode (S57) may be implemented to output a corresponding state in a dashboard display device, etc. when the function of proximity alarm prior to ignition (S563) is activated.

Under the pedestrian recognition mode (S51), the forklift managing device may allow mode switches among the vehicle management mode (S53), the task management mode (S54), the logistics management mode (S55), and the operation management mode (S57) through user setting or linkage with the parent device.

According to this embodiment, functions of the forklift can be controlled with the pedestrian recognition mode among various operation modes or control modes as the primary mode. Also, the functions of the forklift can be controlled under the multiple modes including the operator authentication mode, the vehicle management mode, the task management mode, the logistics management mode, and the operation management mode with the pedestrian recognition mode as the primary mode. Accordingly, it is possible to provide a forklift managing device which can be usefully used in creation of a safe task environment, low-carbon and high-efficiency cargo handling tasks, and intelligent logistics management.

Also, according to this embodiment, forklift related information stored in the storage unit is used, so that, when after-sales service is performed, a worker can rapidly and accurately diagnose a state of the forklift and efficiently perform maintenance and management or breakdown repair according to the diagnosis result.

Also, according to this embodiment, the parent device such as a manager server or central server, through the first communication unit and the RFID reader unit, can efficiently manage a plurality of vehicles (including industrial vehicles such as forklifts) or efficiently perform logistics management using a plurality of forklifts.

Also, according to this embodiment, it is possible to provide user convenience such that the firmware of the forklift controller can be simply updated or upgraded under a wireless network environment such as wireless Internet.

While the present invention has been described with respect to the specific embodiments, it will be apparent to those skilled in the art that various changes and modifications may be made without departing from the spirit and scope of the invention as defined in the following claims.

## Claims

1. A forklift managing device comprising:
a first communication unit connected to a parent device for managing a forklift through a wireless network;
a radio frequency identification (RFID) reader unit for activating an RFID tag or an RFID card within a certain distance and receiving information within the RFID tag or the RFID card;
a controller connected to the first communication unit and the RFID reader unit, the controller controlling the first communication unit and the RFID reader unit, the controller controlling functions of the forklift with a pedestrian recognition mode among multiple modes including the pedestrian recognition mode, an operator authentication mode, a vehicle management mode, a task management mode, a logistics management mode, and an operation management mode as the primary mode;
a storage unit connected to the controller, the storage unit storing forklift management information; and
a second communication unit connected to the controller, the second communication unit being connected to at least one forklift controller for performing hydraulic pressure control, operation control, or hydraulic pressure and operation control,
wherein the controller controls the pedestrian recognition mode as a standby mode to be shifted to any one mode among multiple modes including the operator authentication mode, the vehicle management mode, the task management mode, the logistics management mode, and the operation management mode or to be returned from the shifted mode to the pedestrian recognition mode, and outputs an alarm signal through an alarm output unit connected to the controller or transmits an operation stop control signal to the forklift controller through the second communication unit when a pedestrian approaching the forklift is recognized through a signal from the RFID reader unit.

2. The forklift managing device of claim 1, wherein the RFID reader unit comprises:
a first terminal connected to a first antenna provided at an upper portion of a mast at the front of the forklift or at a front end portion of an overhead guard; and
a second terminal connected to a second antenna provided at a counterweight at the rear of the forklift or a rear end portion of the overhead guard.

3. The forklift managing device of claim 2, wherein the RFID reader unit further comprises an RFID recognition terminal for recognizing an RFID card of a user or operator.

4. The forklift managing device of claim 3, wherein the RFID reader unit comprises:
a first reader module connected to the first terminal;
a second reader module connected to the second terminal; and
a third reader module connected to an RFID recognition terminal,
wherein the recognition distance of the third reader module is shorter than that of the first reader module or the second reader module.

5. The forklift managing device of claim 4, further comprising a power supply blocking unit connected to the controller, the power supply blocking unit blocking a power supply of the forklift,
wherein the controller allows an operation of the forklift when operator information is normally recognized through a signal from the RFID recognition terminal, and blocks the operation of the forklift when the operator information is abnormally recognized.

6. The forklift managing device of claim 5, wherein the storage unit stores operator identification information to be compared with the operator information.

7. The forklift managing device of claim 5, wherein the controller receives the operator identification information through the first communication unit from the parent device.

8. The forklift managing device of claim 1, wherein, in a case where a variation per unit time of a signal input to the RFID reader unit is greater than a reference value, the controller determines the case as a preset first situation on an approach of a pedestrian, and transmits the operation stop control signal to the forklift controller through the second communication unit.

9. The forklift managing device of claim 8, wherein the controller transmits the operation stop control signal in a state in which an auxiliary power supply blocking circuit for seat belt wearing detection of the forklift is activated.

10. The forklift managing device of claim 1, wherein the controller outputs a control signal for controlling at least one of a steering angle or a velocity so as to prevent an overturn of the forklift according to signals of a vehicle velocity sensor and a steering sensor, which are installed in the forklift, under the pedestrian recognition mode.

11. The forklift managing device of claim 1, wherein the controller detects that an operator has left an operator's seat of the forklift and outputs a control signal for automatically parking the forklift according to signals of a seating detection sensor and a parking switch, which are installed in the forklift, under the pedestrian recognition mode.

12. The forklift managing device of claim 1, further comprising a nut loosening monitoring switch for detecting a loosened lift chain fixing nut installed in the forklift and blocking power applied to the controller or the forklift controller of the forklift, under the pedestrian recognition mode.

13. The forklift managing device of claim 1, wherein the controller, under the pedestrian recognition mode, detects an on or off state of an ignition switch, detects the on state of the seating detection sensor or a seat switch, and releases an alarm buzzer, sets an driving function to a feasible state, or sets a task device function to a feasible state when both the ignition switch and the seat switch are in the on state; detects whether an operation switch of a parking brake is in the on state when both the ignition switch and the seat switch are in the off state, and outputs an alarm signal when the operation switch of the parking brake is in the off state; and detects whether a gear neutral signal is in the one state and the operation switch of the parking brake is in the on state when the ignition switch is in the on state and the seat switch is in the off state, and outputs the alarm signal, blocks the driving function, and blocking the task device function when the neutral signal is in the off state and the operation switch of the parking brake is in the off state.

14. The forklift managing device of claim 1, wherein the controller updates previously stored firmware of the controller or the forklift controller, using firmware received through the first communication unit, during an operation of the forklift.

15. The forklift managing device of claim 1, further comprising a user interface unit connected to the controller, the user interface unit outputting information from the controller and receiving a user input, the user interface unit displaying or outputting an event that occurs in at least one mode among the operator authentication mode, the vehicle management mode, the task management mode, the logistics management mode, and the operation management mode with the pedestrian recognition mode as the primary mode.

16. The forklift managing device of claim 15, wherein the controller transmits information of the RFID tag, acquired through the RFID reader unit, and forklift related information received from the forklift controller to the parent device through the first communication unit, and controls information from the parent device to be displayed on a screen of the user interface unit.
